# EUROPÄISCHE PATENTSCHRIFT

(11) **EP 2 139 934 B1**
(45) Veröffentlichungstag und Bekanntmachung des Hinweises auf die Patenterteilung: **21.05.2014**
(21) Anmeldenummer: 08717991.7
(22) Anmeldetag: 19.03.2008
(51) Int. Cl.: C08G 18/08, C08G 18/10, C08L 75/06

(54) **VERFAHREN ZUR UMSETZUNG VON THERMOPLASTISCHEN POLYURETHANEN MIT ISOCYANATGRUPPEN AUFWEISENDEN VERBINDUNGEN**
METHOD FOR THE REACTION OF THERMOPLASTIC POLYURETHANES WITH COMPOUNDS HAVING ISOCYANATE GROUPS
PROCÉDÉ DE RÉACTION DE POLYURÉTHANES THERMOPLASTIQUES AVEC DES COMPOSÉS PRÉSENTANT DES GROUPES ISOCYANATE

(30) Priorität: 27.03.2007 EP 07105042
(43) Veröffentlichungstag der Anmeldung: 06.01.2010
(73) Patentinhaber: BASF SE, 67056 Ludwigshafen (DE)
(72) Erfinder: HILMER, Klaus, 49448 Brockum (DE)
(86) Internationale Anmeldenummer: PCT/EP2008/053261
(87) Internationale Veröffentlichungsnummer: WO 2008/116801

(56) Entgegenhaltungen:
- EP-A- 0 922 719
- WO-A-2005/023529
- DE-A1-102005 028 056
- GB-A- 1 163 649
- US-A- 4 261 946
- US-A1- 2004 092 696

## Beschreibung

Die Erfindung betrifft Verfahren bevorzugt zur Herstellung von vernetzten Polyurethanen mit einer Shore A-Härte zwischen 55 und 85, bevorzugt zwischen 60 und 80 durch Umsetzung von thermoplastischen Polyurethanen, bevorzugt mit einer Shore-A Härte zwischen 55 und 85, mit Isocyanatgruppen aufweisenden Verbindungen, dadurch gekennzeichnet, dass man die Umsetzung in Gegenwart eines Präpolymers durchführt, das das Umsetzungsprodukt von (a) Isocyanaten mit (b) gegenüber Isocyanaten reaktiven Verbindungen mit einem Molekulargewicht zwischen 500 g/mol und 10000 g/mol, bevorzugt zwischen 2000 g/mol und 8000 g/mol darstellt und das Präpolymer eine Glasübergangstemperatur Tg gemessen mittels DSC nach DIN EN ISO 11357-1 von unter - 35 °C aufweist. Des weiteren bezieht sich die Erfindung auf Polyisocyanat-Polyadditionsprodukte, insbesondere Fasern, Schläuche, Kabelmäntel, Profile, Formkörper und Folien, die durch das erfindungsgemäße Verfahren erhältlich sind.

Die Herstellung von thermoplastischen Polyurethanen, die im Folgenden auch als TPU abgekürzt werden, ist allgemein bekannt.

TPU sind teilkristalline Werkstoffe und gehören zu der Klasse der thermoplastischen Elastomere. Charakteristisch für Polyurethan-Elastomere ist der segmentierte Aufbau der Makromoleküle. Aufgrund der unterschiedlichen Kohäsionsenergiedichten dieser Segmente erfolgt im idealen Fall eine Phasentrennung in kristalline "harte" und amorphe "weiche" Bereiche. Die resultierende Zweiphasenstruktur bestimmt das Eigenschaftsprofil von TPU.

Zur Verbesserung des Eigenschaftsprofils von TPU ist es aus der Literatur bekannt, Vernetzung in das TPU einzuführen, die dazu führen, dass die Festigkeiten erhöht, die Wärmestandfestigkeit verbessert, Zug- und Druckverformungsrest verringert, Beständigkeiten gegen Medien aller Art, Rückstellvermögen und Kriechverhalten verbessert werden.

Als Verfahren zur Vernetzung sind u. a. UV- oder Elektronenstrahlvernetzung, Vernetzung über Siloxangruppen und die Ausbildung von Vernetzungen durch Zugabe von Isocyanaten zum geschmolzenen TPU bekannt. Die Umsetzung eines TPU bevorzugt in geschmolzenem Zustand mit Isocyanatgruppen aufweisenden Verbindungen wird auch als Präpolymervernetzung bezeichnet und ist allgemein aus US 4,261,946, US 4,347,338, DE-A 41 15 508, DE-A 44 12 329, EP-A 922 719, GB 2,347,933, US 6,142,189, EP-A 1 158 011, EP-A 1 692 203 und WO 2005/053938 bekannt. Dabei führt die Vernetzung zu einem Härteanstieg des Produktes, der gerade für Anwendungen als Ersatz für Gummi unerwünscht ist. Dieser Härteanstieg lässt sich durch den Einsatz von weicheren TPU-Typen nur bedingt kompensieren, da die notwendigen sehr weichen TPU-Typen ein sehr schlechtes Kristallisationsverhalten aufweisen und kaum verarbeitbar sind.

Aufgabe der vorliegenden Erfindung war es somit, Verfahren zur Herstellung eines vernetzten ursprünglich thermoplastischen Polyurethans zu entwickeln, das eine geringe Härte aufweist und zudem ein sehr gutes Erstarrungsverhalten und eine gute Festigkeit besitzt. Das erhältliche Produkt sollte als Gummiersatz einsetzbar sein und die üblichen hohen Festigkeiten von TPU mit einem geringen Druckverformungsrest sowie höherer Einsatztemperatur besitzen.

Diese Aufgabe konnte durch das eingangs dargestellte Verfahren gelöst werden. Gegenstand der vorliegenden Erfindung sind zudem Polyisocyanat-Polyadditionsprodukte, insbesondere vernetztes Polyurethan mit einer Shore A-Härte zwischen 60 und 80 erhältlich durch das erfindungsgemäße Verfahren.

Das erfindungsgemäße Verfahren sowie die dadurch erhältlichen Produkte zeichnen sich dadurch aus, dass das zudosierte Präpolymer, das in seiner bevorzugten Form Isocyanatgruppen aufweist und somit direkt der Vernetzung dienen kann, einen hohen Weichphasengehalt aufweist und dadurch den Härteanstieg durch die Vernetzung kompensieren kann. Dadurch sind ausgehend von thermoplastischem Polyurethan weiche Produkte erhältlich, die ohne Vernetzung nicht handhabbar wären. Durch die Vernetzungen ist das typische thermoplastische Verhalten deutlich verändert und die Gebrauchstemperaturen sind deutlich höher (je nach Vernetzungsgrad bis zu 180 °C). Der geringe Druckverformungsrest sowie die hohen TPU-typischen mechanischen Festigkeiten bringen enorme Erweiterungen der Einsatzmöglichkeiten.

Die erfindungsgemäße Glasübergangstemperatur Tg des Präpolymers wird erreicht durch den Einsatz der Polyole mit einem Molekulargewicht zwischen 500 g/mol und 5000 g/mol bei der Herstellung des Präpolymers. Durch den Einsatz dieser hochmolekularen Polyole weisen die Präpolymere einen hohen Gehalt an Weichphase auf und durch den bevorzugten Aufbau mit verzweigten Diolen ist die Kristallisationsneigung des Präpolymers entsprechend gesenkt.

Das eingesetzte Präpolymer kann in einer bevorzugten Ausführungsform freie Isocyanatgruppen aufweisen und somit direkt der Vernetzung dienen. Es ist alternativ aber auch möglich, dass das erfindungsgemäße Präpolymer gegenüber Isocyanaten reaktive Gruppen aufweist und zusammen mit Isocyanaten mit dem TPU umgesetzt wird. Das Präpolymer kann somit erfindungsgemäß bevorzugt Hydroxylgruppen aufweisen, in der besonders bevorzugten Ausführungsform weist das Präpolymer Isocyanatgruppen auf, insbesondere besitzt das Präpolymer einen NCO-Gehalt zwischen 1,5 und 6 %. Sofern das erfindungsgemäße Präpolymer Isocyanatgruppen aufweist, ist das Präpolymer im Sinne dieser Schrift und den folgenden Ausführungen als Isocyanatgruppen aufweisende Verbindung anzusehen, mit der das TPU umgesetzt wird.

Die Herstellung des erfindungsgemäßen Präpolymers kann nach allgemein bekannten Verfahren erfolgen, wobei besonders bevorzugt die Umsetzung bei einem Isocyanatüberschuss erfolgt, so dass das Präpolymer freie Isocyanatgruppen aufweist. Die Umsetzung kann in üblichen Apparaturen, beispielsweise Rührkesseln bei Temperaturen zwischen 40 und 80 °C erfolgen.

Als Isocyanate (a) können zur Herstellung des Präpolymers allgemein bekannte Isocyanate, eingesetzt werden, z. B. aliphatische, cycloaliphatische, araliphatische und/oder aromatische Isocyanate, bevorzugt Diisocyanate, beispielsweise Tri-, Tetra-, Penta-, Hexa-, Hepta- und/oder Oktamethylendiisocyanat, 2-Methyl-pentamethylen-diisocyanat-1,5, 2-Ethyl-butylen-diisocyanat-1,4, Pentamethylen-diisocyanat-1,5, Butylen-diisocyanat-1,4, 1-Isocyanato-3,3,5-trimethyl-5-isocyanatomethyl-cyclohexan (Isophoron-diisocyanat, IPDI), 1,4- und/oder 1,3-Bis(isocyanatomethyl)cyclohexan (HXDI), 1,4-Cyclohexan-diisocyanat, 1-Methyl-2,4- und/oder -2,6-cyclohexan-diisocyanat und/oder 4,4'-, 2,4'- und 2,2'-Dicyclohexylmethan-diisocyanat, 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), Diphenylmethandiisocyanat, 3,3'-Dimethyl-diphenyl-diisocyanat, 1,2-Diphenylethandiisocyanat und/oder Phenylendiisocyanat.

Als gegenüber Isocyanaten reaktive Verbindungen (b) mit einem Molekulargewicht zwischen 500 g/mol und 10000 g/mol, bevorzugt zwischen 500 g/mol und 8000 g/mol können zur Herstellung des erfindungsgemäßen Präpolymers allgemein bekannte Polyesterole, Polyetherole und/oder Polycarbonatdiole, die üblicherweise auch unter dem Begriff "Polyole" zusammengefasst werden, bevorzugt mit einer mittleren Funktionalität von 1,8 bis 2,5, bevorzugt 1,9 bis 2,2, insbesondere 2 eingesetzt werden. Bevorzugt basiert das Präpolymer auf Polyesterdiolen als gegenüber Isocyanaten reaktiven Verbindungen (b) mit einem Molekulargewicht zwischen 500 und 8000 g/mol.

Die Polyesterdiole zur Herstellung des Präpolymers können auf allgemein zur Herstellung von Polyesterdiolen bekannten Dicarbonsäuren mit 2 bis 12 Kohlenstoffatomen, vorzugsweise 4 bis 8 Kohlenstoffatomen, und mehrwertigen Alkoholen basieren. Beispiele für mehrwertige Alkohole sind Alkandiole mit 2 bis 10, vorzugsweise 2 bis 6 Kohlenstoffatomen, wie Ethandiol, Propandiol-1,3, Butandiol-1,4, Pentandiol-1,5, Hexandiol-1,6, Decandiol-1,10, 2,2-Dimethylpropandiol-1,3, Propandiol-1,2 und Dialkylenetherglykole wie Diethylenglykol und Dipropylenglykol. Je nach den gewünschten Eigenschaften können die mehrwertigen Alkohole allein oder gegebenenfalls in Mischungen untereinander verwendet werden. Um die Glasübergangstemperatur Tg des Präpolymers möglichst niedrig zu halten, kann es vorteilhaft sein, zur Herstellung des Präpolymers Polyesterdiol einzusetzen, das basiert auf verzweigtkettigen Diolen, besonders bevorzugt basiert das Polyesterdiol auf 3-Methylpentan-1,5-diol. Besonders bevorzugt basiert das Polyesterdiol auf mindestens zwei verschiedenen Diolen, insbesondere wird man Polyesterdiole einsetzen, die auf unterschiedlichen Diolen basieren, d. h. Polyesterdiole, die hergestellt werden durch Kondensation von Dicarbonsäuren mit einer Mischung von mindestens zwei verschiedenen Diolen.

Als Dicarbonsäuren kommen beispielsweise in Betracht: aliphatische Dicarbonsäuren, wie Bernsteinsäure, Glutarsäure, Korksäure, Azelainsäure, Sebacinsäure und vorzugsweise Adipinsäure und aromatische Dicarbonsäuren, wie Phthalsäure, lsophthalsäure und Terephthalsäure. Die Dicarbonsäuren können einzeln oder als Gemische, z. B. in Form einer Bernstein-, Glutar- und Adipinsäuremischung, verwendet werden. Desgleichen sind Mischungen aus aromatischen und aliphatischen Dicarbonsäuren einsetzbar. Zur Herstellung der Polyesterole kann es gegebenenfalls vorteilhaft sein, anstelle der Dicarbonsäuren die entsprechenden Dicarbonsäurederivate, wie Dicarbonsäureester mit 1 bis 4 Kohlenstoffatomen im Alkoholrest, Dicarbonsäureanhydride oder Dicarbonsäurechloride zu verwenden. Besonders bevorzugt basiert das Polyesterdiol auf Adipinsäure.

In dem erfindungsgemäßen Verfahren können bevorzugt Mischungen von Präpolymeren eingesetzt werden. Man setzt das thermoplastische Polyurethan mit einer Mischung von Isocyanatgruppen aufweisenden Verbindungen um, wobei die Mischung eine Isocyanatfunktionalität zwischen 2,1 und 3 aufweist. Dabei besitzt die Mischung der Isocyanatgruppen ausweisenden Verbindungen bevorzugt einen NCO-Gehalt zwischen 4 und 17 %.

Besonders bevorzugt wird man pro 100 Gew.-Teilen thermoplastisches Polyurethan

| | |
|---|---|
| 5 bis 20 Gew.-Teile | Isocyanatgruppen aufweisendes Präpolymer mit einer Glasübergangstemperatur Tg gemessen mittels DSC nach DIN EN ISO 11357-1 von unter - 35 °C, das das Umsetzungsprodukt von (a) Isocyanaten und (b) gegenüber Isocyanaten reaktiven Verbindungen mit einem Molekulargewicht zwischen 500 g/mol und 8000 g/mol ist, |
| 1 bis 10 Gew.-Teile | Isocyanatgruppen aufweisendes Präpolymer, das das Umsetzungsprodukt von (a) Diisocyanaten und (c) Diolen mit einem Molekulargewicht zwischen 62 g/mol und 499 g/mol ist, |
| 1 bis 15 Gew.-Teile | dreifunktionelles Isocyanatgruppen aufweisendes Präpolymer, d. h. drei Isocyanatgruppen pro Molekül aufweisendes Präpolymer, das das Umsetzungsprodukt von (a) Triisocyanaten und Diolen ist |

einsetzen.

Diese besonders bevorzugte Mischung, die das erfindungsgemäße Präpolymer enthält, bietet den Vorteil, dass bei geringem Härteanstieg und gutem Erstarrungsverhalten gute Wärmeformbeständigkeit und geringer Druckverformungsrest erreicht werden.

Durch die Umsetzung des TPU mit Isocyanatgruppen aufweisenden Verbindungen wird erreicht, dass diese Isocyanatgruppen während und/oder nach dem Mischen der Komponenten in kaltem oder warmen Zustand der Komponenten Vernetzungen in Form von beispielsweise Urethan-, Allophanat-, Uretdion- und/oder Isocyanuratstrukturen sowie eventuell Harnstoff- und Biuretbindungen ausbilden. Die Bildung der Vernetzungen kann gegebenenfalls durch Zugabe von Katalysatoren, die zu diesem Zweck allgemein bekannt sind, beispielsweise Alkaliacetate und/oder -formiate, gefördert werden. Außerdem erfolgt eine Vernetzung über freie gegenüber Isocyanaten reaktive Gruppen, z. B. Hydroxylgruppen oder primäre oder sekundäre Aminogruppen, insbesondere Hydroxylgruppen, des linearen TPU-Polymers. Diese reaktiven Gruppen können bereits in dem TPU-Granulat vorliegen, sie entstehen aber auch im Extruder in der TPU-Schmelze z. B. durch thermodynamische Spaltung des Polymerstranges unter Verarbeitungsbedingungen oder auch beim Lagern oder Tempern des isocyanatreichen Materials.

Die Umsetzung des TPU mit den Isocyanatgruppen aufweisenden Verbindungen und dem be-vorzugt Isocyanatgruppen aufweisenden erfindungsgemäßen Präpolymer kann nach allgemein bekannten Verfahren unter dafür üblichen Bedingungen erfolgen. Bevorzugt wird man das granulierte thermoplastische Polyurethan in einem Extruder schmelzen und in geschmolzenem Zustand mit dem Präpolymer sowie den Isocyanatgruppen aufweisenden Verbindungen mischen und zur Reaktion bringen. Besonders bevorzugt wird das erfindungsgemäße Präpolymer durch die Umsetzung mit dem TPU kovalent an das TPU gebunden.

Man führt granuliertes thermoplastisches Polyurethan durch eine Einzugshilfe, d. h. eine förderwirksame Einzugszone, einem Extruder, z. B. Doppelschneckenex-trudern, oder einer Spritzgussapparatur, bevorzugt einem Extruder, zu und in dem Extruder oder der Spritzgussapparatur, bevorzugt in dem Extruder mit Isocyanatgruppen aufweisenden Verbindungen mischen und bevorzugt bereits im Extruder umsetzen. Bevorzugt ist auch die Verarbeitung in Spritzgießapparaturen. Dabei kann bevorzugt in der Spritzgießapparatur nach der Schmelzeaufbereitung das Präpolymer dosiert und zur Umsetzung gebracht werden.

Bevorzugt wird man somit das thermoplastische Polyurethan mit den Isocyanatgruppen aufweisenden Verbindungen mittels Spritzguß verarbeiten, insbesondere mischen und in eine Form spritzen. Bevorzugt wird man im Mehrkompontenspritzguß, bevorzugt Zweikomponentenspritzguß das thermoplastische Polyurethan mit den Isocyanatgruppen aufweisenden Verbindungen an einen Kunststoff anspritzen. Bevorzugt handelt es sich bei dem Kunststoff, an den das thermoplastische Polyurethan in Mischung mit den Isocyanatgruppen aufweisenden Verbindungen angespritzt wird, um Polyamid. Bevorzugt ist dabei, dass das Polyamid glasfaserverstärkt ist.

Durch den Einsatz einer Einzugshilfe, durch die das TPU und die Isocyanatgruppen aufweisenden Verbindungen dem Extruder oder der Spritzgussappartur zugeführt werden, gelingt es, das feste TPU-Granulat zusammen mit den bevorzugt bei 15 °C flüssigen oder zähflüssigen, bevorzugt flüssigen Isocyanatgruppen aufweisenden Verbindungen in den Extruder oder die Spritzgussapparatur schnell und sicher einzuführen. Da über die Länge des Extruders üblicherweise der Druck der Schmelze steigt, wird man die Isocyanatgruppen aufweisenden Verbindungen bevorzugt an einer Stelle in den Extruder einführen, an der der Druck der Schmelze kleiner als 200 bar ist. Man führt die Isocyanatgruppen aufweisenden Verbindungen zusammen mit granulierten thermoplastischen Polyurethanen durch die Einzugshilfe dem Extruder oder der Spritzgussapparatur ein, d. h. man verwendet dieselbe Einzughilfe für das TPU und die Isocyanatgruppen aufweisenden Verbindungen.

Bei dem Extruder kann es sich um einen allgemein bekannten Extruder handeln, wie er beispielsweise zur Extrusion von TPU allgemein bekannt ist, z. B. einen Ein- oder bevorzugt Zweiwellenextruder, besonders bevorzugt Einwellenextruder mit Einzughilfe, insbesondere genuteten Einzughilfe. Allerdings führen die besonders bevorzugten Ausgestaltungen gemäß der vorliegenden Erfindung zu einer besonders effektiven und wirtschaftlichen Durchmischung und Umsetzung von TPU und Isocyanatgruppen aufweisenden Verbindungen.

Einzugshilfen für Extruder sind dem Fachmann auf dem Gebiet der Extrusion allgemein bekannt und vielfach beschrieben. Bevorzugt handelt es sich bei der Einzugshilfe um eine genutete Einzugszone. Genutete Einzugshilfen, Nutbuchsenextruder oder Extruder mit genuteter Einzugszone genannt, sind dem Fachmann auf dem Gebiet der Extrudertechnik allgemein bekannt und vielfältig beschrieben, so z. B. in "Der Extruder im Extrusionsprozess - Grundlage für Qualität und Wirtschaftlichkeit", VDI-Verlag GmbH, Düsseldorf, 1989, ISBN 3-18-234141-3, Seiten 13 bis 27. Charakteristisch für eine genutete Einzugszone ist das Vorhandensein üblicherweise im wesentlichen parallel zur Längserstreckung der Schnecke in der Einzugszone des Extruders vorhandene Längsnuten in der Zylinderwand, die üblicherweise in Förderrichtung gesehen zum Ende der Einzugzone konisch auslaufen. Erfindungsgemäß führen diese Nuten trotz der Zudosierung einer flüssigen Komponenten in den Extruder zu einer deutlich verbesserten axialen Förderung von TPU und Isocyanatgruppen aufweisenden Verbindungen durch die Schnecke im Extruder.

Bevorzugt weisen die Nuten eine Tiefe auf, die zwischen 10 % und 90 % des mittleren Teilchendurchmessers vom TPU beträgt, d. h. die Tiefe der Nuten ist deutlich kleiner als der mittlere Teilchendurchmesser des granulierten TPU. Besonders bevorzugt weisen die Nuten eine Tiefe zwischen 1 mm und 8 mm, bevorzugt zwischen 2 mm und 5 mm auf. Die genutete Einzugszone besitzt bevorzugt eine Länge zwischen dem 2fachen und dem 4fachen des Schneckendurchmessers. Bevorzugt weist die genutete Einzugszone zwischen 4 und 32, besonders bevorzugt zwischen 4 und 16 Nuten auf, die bevorzugt parallel oder spiralförmig, bevorzugt parallel zur Längsachse des Extruders verlaufen.

Als Schnecken können allgemein bekannte Schnecken eingesetzt, z. B. 3- oder 5-Zonen Schnecken. Besondere Vorteile ergeben sich im vorliegenden Verfahren, wenn man einen Extruder einsetzt, der eine Barriereschnecke aufweist. Barriereschnecken sind in der Extrusion allgemein bekannt, z. B. aus "Der Extruder im Extrusionsprozess - Grundlage für Qualität und Wirtschaftlichkeit", VDI-Verlag GmbH, Düsseldorf, 1989, ISBN 3-18-234141-3, Seiten 107 bis 125, Seiten 139 bis 143. Unerwartet und für den Fachmann überraschend führen gerade Barriereschnecken bei der bevorzugten festflüssig-Dosierung insbesondere beim Vermischen und Umsetzen von TPU und Isocyanatgruppen aufweisenden Verbindungen zu besonderen Vorteilen, die darin liegen, dass die flüssigen Komponenten schnell über den Barrieresteg in das Schmelzebett der Schnecke übertreten und dadurch selbst thermisch nicht geschädigt werden sowie das Aufschmelzen der Granulate nicht beeinflussen. Die Umsetzung erfolgt dann bevorzugt ausgehend von sehr hohem Isocyanatgehalt langsam abfallend, da kontinuierlich Schmelze über die Barriere fließt. Dadurch wird der Prozess besonders gut kontrollierbar.

Die Temperatur der Schmelze in dem Extruder oder in der Spritzgussapparatur, bevorzugt dem Extruder beträgt üblicherweise zwischen 150 °C bis 240 °C, bevorzugt zwischen 180 °C bis 230 °C.

Die Verweilzeit des TPU in dem Extruder beträgt bevorzugt zwischen 120 s und 600 s.

Das erfindungsgemäße Verfahrensprodukt kann nach allgemein bekannten Verfahren zu Formkörpern aller Art, Folien, Schläuchen, Kabelummantelungen, Spritzgussartikeln oder Fasern verarbeitet werden. Die Verarbeitungstemperatur bei der Herstellung der Folien, Formkörpern oder Fasern beträgt bevorzugt 150 bis 230 °C, besonders bevorzugt 180 bis 220 °C. Eine Verarbeitung der Mischung zu den gewünschten Folien, Formkörpern und/oder Fasern erfolgt bevorzugt direkt nach oder während dem Vermischen der Komponenten, da eine thermoplastische Verarbeitung der Polyisocyanat-Polyadditionsprodukte zu Folien, Formkörpern oder Fasern bevorzugt vor und/oder während der Ausbildung der Vernetzungen durchgeführt wird.

Durch eine anschließende Temperung/Lagerung der Verfahrensprodukte aus der Extrusion, dem Spritzguss oder der Schmelzverspinnung, beispielsweise den Formkörpern, Folien oder Fasern, bei einer Temperatur von beispielsweise 120 bis 80 °C für eine Dauer von üblicherweise mindestens 2 Stunden, bevorzugt 12 bis 48 Stunden bei Raumtemperatur ginge alles entsprechend langsamer, können Allophanat- Uretdionund/oder Isocyanuratvernetzungen durch die im Überschuss vorhandenen Isocyanatgruppen in den Polyisocyanat-Polyadditionsprodukten ausgebildet werden. Diese Vernetzungen führen zu den sehr vorteilhaften Eigenschaften der Produkte in Bezug auf die Temperaturstabilität und das Hystereseverhalten nach Belastung.

Als TPU können allgemein bekannte TPU eingesetzt werden. Bevorzugt weist das thermoplastische Polyurethan eine Shore-A Härte zwischen 55 und 85, besonders bevorzugt zwischen 60 und 80 auf. Die TPU können in dem erfindungsgemäßen Verfahren in üblicher Form, beispielsweise als Granulat oder Pellets, bevorzugt Granulat, eingesetzt werden. TPU sind allgemein bekannt und vielfältig beschrieben.

Verfahren zur Herstellung von TPU sind allgemein bekannt. Beispielsweise können die thermoplastischen Polyurethane durch Umsetzung von (a) Isocyanaten mit (b) gegenüber Isocyanaten reaktiven Verbindungen mit einem Molekulargewicht von 500 bis 10000 und gegebenenfalls (c) Kettenverlängerungsmitteln mit einem Molekulargewicht von 50 bis 499 gegebenenfalls in Gegenwart von (d) Katalysatoren und/oder (e) üblichen Hilfs- und/oder Zusatzstoffen herstellt werden. Im Folgenden sollen beispielhaft die Ausgangskomponenten und Verfahren zur Herstellung der bevorzugten TPU dargestellt werden. Die bei der Herstellung der TPU üblicherweise verwendeten Komponenten (a), (b) sowie gegebenenfalls (c), (d) und/oder (e) sollen im Folgenden beispielhaft beschrieben werden:
a) Als organische Isocyanate (a) können allgemein bekannte aliphatische, cycloaliphatische, araliphatische und/oder aromatische Isocyanate, bevorzugt Diisocyanate eingesetzt werden, beispielsweise Tri-, Tetra-, Penta-, Hexa-, Heptaund/oder Oktamethylendiisocyanat, 2-Methyl-pentamethylen-diisocyanat-1,5, 2-Ethyl-butylen-diisocyanat-1,4, Pentamethylen-diisocyanat-1,5, Butylen-diisocyanat-1,4, 1-Isocyanato-3,3,5-trimethyl-5-isocyanatomethyl-cyclohexan (Isophoron-diisocyanat, IPDI), 1,4- und/oder 1,3-Bis(isocyanatomethyl)cyclohexan (HXDI), 1,4-Cyclohexan-diisocyanat, 1-Methyl-2,4- und/oder-2,6-cyclohexan-diisocyanat und/oder 4,4'-, 2,4'- und 2,2'-Dicyclohexylmethan-diisocyanat, 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), Diphenylmethandiisocyanat, 3,3'-Dimethyl-diphenyl-diisocyanat, 1,2-Diphenylethandiisocyanat und/oder Phenylendiisocyanat.
b) Als gegenüber Isocyanaten reaktive Verbindungen (b) können die allgemein bekannten gegenüber Isocyanaten reaktiven Verbindungen eingesetzt werden, beispielsweise Polyesterole, Polyetherole und/oder Polycarbonatdiole, die üblicherweise auch unter dem Begriff "Polyole" zusammengefasst werden, mit Molekulargewichten von 500 bis 8000, bevorzugt 600 bis 6000, insbesondere 800 bis 4000, und bevorzugt einer mittleren Funktionalität von 1,8 bis 2,3, bevorzugt 1,9 bis 2,2, insbesondere 2. Bevorzugt setzt man Polyetherpolyole ein, besonders bevorzugt solche Polyetherole auf Basis von Polyoxytetramethylenglykol. Die Polyetherole weisen den Vorteil auf, dass sie eine höhere Hydrolysestabilität als Polyesterole besitzen.
c) Als Kettenverlängerungsmittel (c) können allgemein bekannte aliphatische, araliphatische, aromatische und/oder cycloaliphatische Verbindungen mit einem Molekulargewicht von 50 bis 499, bevorzugt 2-funktionelle Verbindungen, eingesetzt werden, beispielsweise Diamine und/oder Alkandiole mit 2 bis 10 C-Atomen im Alkylenrest, insbesondere Butandiol-1,4, Hexandiol-1,6 und/oder Di-, Tri-, Tetra-, Penta-, Hexa-, Hepta-, Okta-, Nona- und/oder Dekaalkylenglykole mit 3 bis 8 Kohlenstoffatomen, bevorzugt entsprechende Oligo- und/oder Polypropylenglykole, wobei auch Mischungen der Kettenverlängerer eingesetzt werden können.
d) Geeignete Katalysatoren, welche insbesondere die Reaktion zwischen den NCO-Gruppen der Diisocyanate (a) und den Hydroxylgruppen der Aufbaukomponenten (b) und (c) beschleunigen, sind die nach dem Stand der Technik bekannten und üblichen tertiären Amine, wie z. B. Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan und ähnliche sowie insbesondere organische Metallverbindungen wie Titansäureester, Eisenverbindungen wie z. B. Eisen-(III)- acetylacetonat, Zinnverbindungen, z. B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,0001 bis 0,1 Gew.-Teilen pro 100 Gew.-Teile Polyhydroxylverbindung (b) eingesetzt.
e) Neben Katalysatoren (d) können den Aufbaukomponenten (a) bis (c) auch übliche Hilfsmittel (e) hinzugefügt werden. Genannt seien beispielsweise oberflächenaktive Substanzen, Füllstoffe, Flammschutzmittel, Keimbildungsmittel, Oxidationsstabilisatoren, Gleit- und Entformungshilfen, Farbstoffe und Pigmente, Stabilisatoren, z. B. gegen Hydrolyse, Licht, Hitze oder Verfärbung, anorganische und/oder organische Füllstoffe, Verstärkungsmittel und Weichmacher. Als Hydrolyseschutzmittel werden bevorzugt oligomere und/oder polymere aliphatische oder aromatische Carbodiimide verwendet.

Nähere Angaben über die oben genannten Hilfsmittel und Zusatzstoffe sind der Fachliteratur zu entnehmen, z. B. aus Plastics Additive Handbook, 5th edition, H. Zweifel, ed, Hanser Publishers, München, 2001. Alle in dieser Schrift genannten Molekulargewichte weisen die Einheit [g/mol] auf. Zur Einstellung von Härte der TPU können die Aufbaukomponenten (b) und (c) in relativ breiten molaren Verhältnissen variiert werden. Bewährt haben sich molare Verhältnisse von Komponente (b) zu insgesamt einzusetzenden Kettenverlängerungsmitteln (c) von 10:1 bis 1:10, insbesondere von 1:1 bis 1:4, wobei die Härte der TPU mit zunehmendem Gehalt an (c) ansteigt. Die Umsetzung kann bei üblichen Kennzahlen erfolgen, bevorzugt bei einer Kennzahl von 60 bis 120, besonders bevorzugt bei einer Kennzahl von 80 bis 110. Die Kennzahl ist definiert durch das Verhältnis der insgesamt bei der Umsetzung eingesetzten Isocyanatgruppen der Komponente (a) zu den gegenüber Isocyanaten reaktiven Gruppen, d. h. den aktiven Wasserstoffen, der Komponenten (b) und (c). Bei einer Kennzahl von 100 kommt auf eine Isocyanatgruppe der Komponente (a) ein aktives Wasserstoffatom, d. h. eine gegenüber Isocyanaten reaktive Funktion, der Komponenten (b) und (c). Bei Kennzahlen über 100 liegen mehr Isocyanatgruppen als OH-Gruppen vor. Die Herstellung der TPU kann nach den bekannten Verfahren kontinuierlich, beispielsweise mit Reaktionsextrudern oder dem Bandverfahren nach one-shot oder dem Präpolymerverfahren oder diskontinuierlich nach dem bekannten Präpolymerprozess erfolgen. Bei diesen Verfahren können die zur Reaktion kommenden Komponenten (a), (b) und gegebenenfalls (c), (d) und/oder (e) nacheinander oder gleichzeitig miteinander vermischt werden, wobei die Reaktion unmittelbar einsetzt. Beim Extruderverfahren werden die Aufbaukomponenten (a), (b) sowie gegebenenfalls (c), (d) und/oder (e) einzeln oder als Gemisch in den Extruder eingeführt, z. B. bei Temperaturen von 100 bis 280 °C, vorzugsweise 140 bis 250 °C zur Reaktion gebracht, das erhaltene TPU wird extrudiert, abgekühlt und granuliert oder beim Granulieren abgekühlt.

Besonders bevorzugt können TPU gemäß der WO 03/014179 zur erfindungsgemäßen Umsetzung, d. h. mit dem Präpolymer, eingesetzt werden. Die nachfolgenden Ausführungen bis zu den Beispielen beziehen sich auf diese besonders bevorzugten TPU. Diese besonders bevorzugten TPU sind bevorzugt erhältlich durch Umsetzung von (a) Isocyanaten mit (b1) Polyesterdiolen mit einem Schmelzpunkt größer 150 °C, (b2) Poly-etherdiolen und/oder Polyesterdiolen jeweils mit einem Schmelzpunkt kleiner 150 °C und einem Molekulargewicht von 501 bis 8000 g/mol sowie gegebenenfalls (c) Diolen mit einem Molekulargewicht von 62 g/mol bis 500 g/mol. Besonders bevorzugt sind dabei thermoplastische Polyurethane, bei denen das Molverhältnis von den Diolen (c) mit einem Molekulargewicht von 62 g/mol bis 500 g/mol zur Komponente (b2) kleiner 0,2, besonders bevorzugt 0,1 bis 0,01, beträgt.

Unter dem Ausdruck "Schmelzpunkt" ist in dieser Schrift in diesem Zusammenhang mit den besonders bevorzugten TPU das Maximum des Schmelzpeaks einer Aufheizkurve zu verstehen, die mit einem handelsüblichen DSC-Gerät (z. B. DSC 7 / Fa. Perkin-Elmer) gemessen wurde.

Die in dieser Schrift angegebenen Molekulargewichte stellen die zahlenmittleren Molekulargewichte dar in [g/mol].

Diese besonders bevorzugten thermoplastischen Polyurethane können bevorzugt dadurch hergestellt werden, dass man einen, bevorzugt hochmolekularen, bevorzugt teilkristallinen, thermoplastischen Polyester mit einem Diol (c) umsetzt und anschließend das Umsetzungsprodukt aus (i) enthaltend (b1) Polyesterdiol mit einem Schmelzpunkt größer 150 °C sowie gegebenenfalls (c) Diol zusammen mit (b2) Polyetherdiolen und/oder Polyesterdiolen jeweils mit einem Schmelzpunkt kleiner 150 °C und einem Molekulargewicht von 501 bis 8000 g/mol sowie gegebenenfalls weiteren (c) Diolen mit einem Molekulargewicht von 62 bis 500 g/mol mit (a) Isocyanat gegebenenfalls in Gegenwart von (d) Katalysatoren und/oder (e) Hilfsmitteln umsetzt.

Bevorzugt ist bei der Umsetzung (ii) das Molverhältnis von den Diolen (c) mit einem Molekulargewicht von 62 g/mol bis 500 g/mol zu der Komponente (b2) kleiner 0,2, bevorzugt 0,1 bis 0,01.

Während durch den Schritt (i) die Hartphasen durch den im Schritt (i) eingesetzten Polyester für das Endprodukt zur Verfügung gestellt werden, erfolgt durch den Einsatz der Komponente (b2) im Schritt (ii) der Aufbau der Weichphasen. Die bevorzugte technische Lehre besteht darin, dass Polyester mit einer ausgeprägten, gut kristallisierenden Hartphasenstruktur bevorzugt in einem Reaktionsextruder aufgeschmolzen und mit einem niedermolekularen Diol zunächst abgebaut werden zu kürzeren Polyestern mit freien Hydroxylendgruppen. Hierbei bleibt die ursprüngliche hohe Kristallisationstendenz des Polyesters erhalten und kann anschließend genutzt werden, um bei rasch verlaufender Umsetzung TPU mit den vorteilhaften Eigenschaften zu erhalten, als da sind hohe Zugfestigkeitswerte, niedrige Abriebswerte und wegen des hohen und engen Schmelzbereichs hohe Wärmeformbeständigkeiten und niedrige Druckverformungsreste. Somit werden nach dem bevorzugten Verfahren bevorzugt hochmolekulare, teilkristalline, thermoplastische Polyester mit niedermolekularen Diolen (c) unter geeigneten Bedingungen in kurzer Reaktionszeit abgebaut zu schnell kristallisierenden PolyEsterdiolen (b1), die ihrerseits dann mit anderen Polyesterdiolen und/oder Polyetherdiolen und Diisocyanaten in hochmolekulare Polymerketten eingebunden werden.

Dabei weist der eingesetzte thermoplastische Polyester, d. h. vor der Umsetzung (i) mit dem Diol (c), bevorzugt ein Molekulargewicht von 15000 g/mol bis 40000 g/mol sowie bevorzugt einen Schmelzpunkt von größer 160 °C, besonders bevorzugt von 170 °C bis 260 °C auf.

Als Ausgangsprodukt, d. h. als Polyester, der in dem Schritt (i) bevorzugt in geschmolzenem Zustand besonders bevorzugt bei einer Temperatur von 230 °C bis 280 °C bevorzugt für eine Dauer von 0,1 min bis 4 min, besonders bevorzugt 0,3 min bis 1 min mit dem oder den Diol(en) (c) umgesetzt wird, können allgemein bekannte, bevorzugt hochmolekulare, bevorzugt teilkristalline, thermoplastische Polyester, beispielsweise in granulierter Form, eingesetzt werden. Geeignete Polyester basieren beispielsweise auf aliphatischen, cycloaliphatischen, araliphatischen und/oder aromatischen Dicarbonsäuren, beispielsweise Milchsäure und/oder Terephthalsäure sowie aliphatischen, cycloaliphatischen, araliphatischen und/oder aromatischen Dialkoholen, beispielsweise Ethandiol-1,2, Butandiol-1,4 und/oder Hexandiol-1,6.

Besonders bevorzugt werden als Polyester eingesetzt: Poly-L-Milchsäure und/oder Polyalkylenterephthalat, beispielsweise Polyethylenterephthalat, Polypropylenterephthalat, Polybutylenterephthalat, insbesondere Polybutylenterephthalat.

Die Herstellung dieser Ester aus den genannten Ausgangsstoffen ist dem Fachmann allgemein bekannt und vielfach beschrieben. Geeignete Polyester sind zudem kommerziell erhältlich.

Den thermoplastischen Polyester schmilzt man bevorzugt bei einer Temperatur von 180 °C bis 270 °C auf. Die Umsetzung (i) mit dem Diol (c) führt man bevorzugt bei einer Temperatur von 230 °C bis 280 °C, bevorzugt 240 °C bis 280 °C durch.

Als Diol (c) können in dem Schritt (i) zur Umsetzung mit dem thermoplastischen Polyester und gegebenenfalls im Schritt (ii) allgemein bekannte Diole mit einem Molekulargewicht von 62 bis 500 g/mol eingesetzt werden, beispielsweise die an späterer Stelle genannten, z. B. Ethylenglykol, 1,3-Propandiol, 1,4-Butandiol, 1,5-Pentandiol, 1,6-Hexandiol, Heptandiol, Oktandiol, bevorzugt Butan-1,4-diol und/oder Ethan-1,2-diol.

Das Gewichtsverhältnis vom thermoplastischen Polyester zum Diol (c) in dem Schritt (i) beträgt üblicherweise 100:1 bis 100:10, bevorzugt 100:1,5 bis 100:8.

Die Umsetzung des thermoplastischen Polyesters mit dem Diol (c) in dem Umsetzungsschritt (i) wird bevorzugt in Gegenwart von üblichen Katalysatoren, beispielsweise solchen, die an späterer Stelle beschrieben werden, durchgeführt. Bevorzugt werden für diese Umsetzung Katalysatoren auf der Basis von Metallen eingesetzt. Bevorzugt führt man die Umsetzung im Schritt (i) in Gegenwart von 0,1 bis 2 Gew.-% Katalysatoren, bezogen auf das Gewicht des Diols (c), durch. Die Umsetzung in Gegenwart derartiger Katalysatoren ist vorteilhaft, um die Reaktion in der zur Verfügung stehenden kurzen Verweilzeit in dem Reaktor, beispielsweise einem Reaktionsextruder durchführen zu können.

Als Katalysatoren kommen beispielsweise für diesen Umsetzungsschritt (i) in Frage: Tetrabutylorthotitanat und/oder Zinn-(II)-Dioctoat, bevorzugt Zinn-dioctoat.

Das Polyesterdiol (b1) als Umsetzungsprodukt aus (i) weist bevorzugt ein Molekulargewicht von 1000 g/mol bis 5000 g/mol auf. Der Schmelzpunkt des Polyesterdiols als Umsetzungsprodukt aus (i) beträgt bevorzugt 150 °C bis 260 °C, insbesondere 165 °C bis 245 °C, d. h. dass das Umsetzungsprodukt des thermoplastischen Polyesters mit dem Diol (c) im Schritt (i) Verbindungen mit dem genannten Schmelzpunkt enthält, die in dem anschließenden Schritt (ii) eingesetzt werden.

Durch die Umsetzung des thermoplastischen Polyesters mit dem Diol (c) in dem Schritt (i) wird die Polymerkette des Polyesters durch das Diol (c) durch Umesterung gespalten. Das Umsetzungsprodukt des TPU weist deshalb freie Hydroxylendgruppen auf und wird bevorzugt in dem weiteren Schritt (ii) zu dem eigentlichen Produkt, dem TPU, weiterverarbeitet.

Die Umsetzung des Reaktionsproduktes aus dem Schritt (i) in dem Schritt (ii) erfolgt bevorzugt durch Zugabe von a) Isocyanat (a) sowie (b2) Polyetherdiolen und/oder Polyesterdiolen jeweils mit einem Schmelzpunkt kleiner 150 °C und einem Molekulargewicht von 501 bis 8000 g/mol sowie gegebenenfalls weiteren Diolen (c) mit einem Molekulargewicht von 62 bis 500, (d) Katalysatoren und/oder (e) Hilfsstoffe zu dem Reaktionsprodukt aus (i). Die Umsetzung von dem Reaktionsprodukt mit dem Isocyanat erfolgt über die in dem Schritt (i) entstandenen Hydroxylendgruppen. Die Umsetzung in dem Schritt (ii) erfolgt bevorzugt bei einer Temperatur von 190 °C bis 250 °C bevorzugt für eine Dauer von 0,5 bis 5 min, besonders bevorzugt 0,5 bis 2 min, bevorzugt in einem Reaktionsextruder, besonders bevorzugt in dem gleichen Reaktionsextruder, in dem auch der Schritt (i) durchgeführt wurde. Beispielsweise kann die Umsetzung des Schrittes (i) in den ersten Gehäusen eines üblichen Reaktionsextruders erfolgen und an späterer Stelle, d. h. späteren Gehäusen, nach der Zugabe der Komponenten (a) und (b2), die entsprechende Umsetzung des Schrittes (ii) durchgeführt werden. Beispielsweise können die ersten 30 bis 50 % der Länge des Reaktionsextruders für den Schritt (i) verwendet und die restlichen 50 bis 70 % für den Schritt (ii) eingesetzt werden.

Die Umsetzung in dem Schritt (ii) erfolgt bevorzugt bei einem Überschuss der Isocyanatgruppen zu den gegenüber Isocyanaten reaktiven Gruppen. Bevorzugt beträgt in der Umsetzung (ii) das Verhältnis der Isocyanatgruppen der zu den Hydroxylgruppen 1:1 bis 1,2:1, besonders bevorzugt 1,02:1 bis 1,2:1.

Bevorzugt führt man die Umsetzungen (i) und (ii) in einem allgemein bekannten Reaktionsextruder durch. Derartige Reaktionsextruder sind beispielhaft in den Firmenschriften von Werner & Pfileiderer oder in der DE-A 2 302 564 beschrieben.

Bevorzugt wird das bevorzugte Verfahren derart durchgeführt, dass man in das erste Gehäuse eines Reaktionsextruders mindestens einen thermoplastischen Polyester, z. B. Polybutylenterephthalat, dosiert und bei Temperaturen bevorzugt zwischen 180 °C bis 270 °C, bevorzugt 240 °C bis 270 °C aufschmilzt, in ein nachfolgendes Gehäuse ein Diol (c), z. B. Butandiol, und bevorzugt einen Umesterungskatalysator zugibt, bei Temperaturen zwischen 240 °C bis 280 °C den Polyester durch das Diol (c) zu Polyesteroligomeren mit Hydroxylendgruppen und Molekulargewichten zwischen 1000 bis 5000 g/mol abbaut, in einem nachfolgenden Gehäuse Isocyanat (a) und (b2) gegenüber Isocyanaten reaktiven Verbindungen mit einem Molekulargewicht von 501 bis 8000 g/mol sowie gegebenenfalls (c) Diole mit einem Molekulargewicht von 62 bis 500, (d) Katalysatoren und/oder (e) Hilfsstoffe zudosiert und anschließend bei Temperaturen von 190 °C bis 250 °C den Aufbau zu den bevorzugten thermoplastischen Polyurethanen durchführt.

Bevorzugt werden im Schritt (ii) mit Ausnahme der im Umsetzungsprodukt von (i) enthaltenen (c) Diole mit einem Molekulargewicht von 62 bis 500 keine (c) Diole mit einem Molekulargewicht von 62 bis 500 zugeführt.

Der Reaktionsextruder weist in dem Bereich, in dem der thermoplastische Polyester geschmolzen wird, bevorzugt neutrale und/oder rückwärtsfördernde Knetblöcke und Rückförderelemente auf sowie in dem Bereich, in dem der thermoplastische Polyester mit dem Diol umgesetzt wird, bevorzugt Schneckenmischelemente, Zahnscheiben und/oder Zahnmischelemente in Kombination mit Rückförderelementen.

Nach dem Reaktionsextruder wird die klare Schmelze üblicherweise mittels einer Zahnradpumpe einer Unterwassergranulierung zugeführt und granuliert.

Die besonders bevorzugten thermoplastischen Polyurethane zeigen optisch klare, einphasige Schmelzen, die rasch erstarren und infolge der teilkristallinen Polyesterhartphase schwach opake bis weiß-undurchsichtige Formkörper bilden. Das rasche Erstarrungsverhalten ist ein entscheidender Vorteil zu bekannten Rezepturen und Herstellverfahren für thermoplastische Polyurethane. Das rasche Erstarrungsverhalten ist so ausgeprägt, dass selbst Produkte mit Härten 50 bis 60 Shore-A im Spritzguß mit Zykluszeiten kleiner 35s verarbeitbar sind. Auch in der Extrusion, z. B. bei der Blasfolienherstellung, treten keinerlei TPU-typische Probleme wie Verkleben oder Verblocken der Folien oder Schläuche auf.

Der Anteil des thermoplastischen Polyesters in dem Endprodukt, d. h. dem thermoplastischen Polyurethan, beträgt bevorzugt 5 bis 75 Gew.-%. Besonders bevorzugt stellen die bevorzugten thermoplastischen Polyurethane Produkte der Reaktion eines Gemisches enthaltend 10 bis 70 Gew.-% des Umsetzungsproduktes aus (i), 10 bis 80 Gew.-% (b2) und 10 bis 20 Gew.-% (a) dar, wobei die Gewichtsangaben auf das Gesamtgewicht des Gemisches enthaltend (a), (b2), (d), (e) und das Umsetzungsprodukt aus (i) bezogen sind.

### Beispiel

In einer Spritzgießapparatur der Marke Krauss-Maffei wurden das TPU Elastollan^{®} C 65 A 15 HPM (Elastogran GmbH) zusammen mit 18 % einer Präpolymermischung enthaltend die folgenden Komponenten

Elastollan^{®} PLP 9206 55 % (Weichphasen-Präpolymer)
Elastollan^{®} PLP 9290 20 % (Isocyanat-Präpolymer mit hohem Isocyanatgehalt)
Basonat^{®} HI 100 (HDI-Triisocyanat, BASF Aktiengesellschaft) 25 %

bei einer Temperatur von 195 °C gemischt und zu Prüfkörpern in Kastenform verarbeitet. Nach einer Temperung für 20 h bei einer Temperatur von 80 °C wiesen die Produkte folgende Eigenschaften auf
1) Druckverformungsrest 72 h/23 °C von 10 % gegenüber 18 % bei unvernetzem Produkt (DIN ISO 815)
2) Druckverformungsrest 24 h/70 °C von 20 % gegenüber 30 % bei unvernetztem Produkt (DIN ISO 815)
3) Das vernetzte Produkt zeigt 98 %ige Unlöslichkeit in Phenol/Chlorbenzol-Gemisch gegenüber vollständiger Löslichkeit des unvernetzten Produktes
4) Härteanstieg von 68 Shore-A bei unvernetztem C 65 A 15 HPM auf 70 Shore-A bei der o. g. Mischung. Bei einer Vergleichseinstellung ohne Weichphasenpräpolymer stieg die Härte auf 77 Shore-A (DIN 53505)

## Patentansprüche

1. Verfahren zur Umsetzung von thermoplastischen Polyurethanen mit Isocyanatgruppen aufweisenden Verbindungen, **dadurch gekennzeichnet, dass**
- man die Umsetzung in Gegenwart eines Präpolymers durchführt, das das Umsetzungsprodukt von (a) Isocyanaten mit (b) gegenüber Isocyanaten reaktiven Verbindungen mit einem Molekulargewicht zwischen 500 g/mol und 10000 g/mol, bevorzugt zwischen 2000 g/mol und 8000 g/mol darstellt,
- und das Präpolymer eine Glasübergangstemperatur Tg gemessen mittels DSC nach DIN EN ISO 11357-1 von unter - 35 °C aufweist,
- wobei das thermoplastische Polyurethan mit einer Mischung von Isocyanatgruppen aufweisenden Verbindungen umgesetzt wird und diese Mischung eine Isocyanatfunktionalität zwischen 2,1 und 3 aufweist,
und man das thermoplastische Polyurethan granuliert und das feste granulierte thermoplastische Polyurethan durch eine Einzugshilfe mit den flüssigen oder zähflüssigen Isocyanatgruppen aufweisenden Verbindungen in einen Extruder oder eine Spritzgussapparatur einführt.

2. Verfahren nach Anspruch 1, **dadurch gekennzeichnet, dass** das Präpolymer Hydroxylgruppen aufweist.

3. Verfahren nach Anspruch 1, **dadurch gekennzeichnet, dass** das Präpolymer Isocyanatgruppen aufweist.

4. Verfahren nach Anspruch 3, **dadurch gekennzeichnet, dass** das Präpolymer einen NCO-Gehalt zwischen 1,5 und 6 % aufweist.

5. Verfahren nach Anspruch 1, **dadurch gekennzeichnet, dass** das Präpolymer basiert auf Polyesterdiolen als gegenüber Isocyanaten reaktiven Verbindungen mit einem Molekulargewicht zwischen 500 und 8000 g/mol.

6. Verfahren nach Anspruch 5, **dadurch gekennzeichnet, dass** das Polyesterdiol basiert auf verzweigtkettigen Diolen.

7. Verfahren nach Anspruch 6, **dadurch gekennzeichnet, dass** das Polyesterdiol basiert auf 3-Methylpentan-1,5-diol.

8. Verfahren nach Anspruch 5, **dadurch gekennzeichnet, dass** das Polyesterdiol basiert auf mindestens zwei verschiedenen Diolen.

9. Verfahren nach Anspruch 5, **dadurch gekennzeichnet, dass** man Polyesterdiole einsetzt, die auf unterschiedlichen Diolen basieren.

10. Verfahren nach Anspruch 5, **dadurch gekennzeichnet, dass** das Polyesterdiol basiert auf Adipinsäure.

11. Verfahren nach Anspruch 1, **dadurch gekennzeichnet, dass** die Mischung einen NCO-Gehalt zwischen 4 und 17 % aufweist.

12. Verfahren nach Anspruch 1, **dadurch gekennzeichnet, dass** man das Präpolymer durch die Umsetzung mit dem TPU kovalent an das TPU bindet.

13. Verfahren nach Anspruch 1, **dadurch gekennzeichnet, dass** man pro 100 Gew.-Teilen thermoplastisches Polyurethan
| | |
|---|---|
| 5 bis 20 Gew.-Teile | Isocyanatgruppen aufweisendes Präpolymer mit einer Glasübergangstemperatur Tg gemessen mittels DSC nach DIN EN ISO 11357-1 von unter- 35 °C, das das Umsetzungsprodukt von (a) Isocyanaten und (b) gegenüber Isocyanaten reaktiven Verbindungen mit einem Molekulargewicht zwischen 500 g/mol und 8000 g/mol ist, |
| 1 bis 10 Gew.-Teile | Isocyanatgruppen aufweisendes Präpolymer, das das Umsetzungsprodukt von (a) Diisocyanaten und (c) Diolen mit einem Molekulargewicht zwischen 62 g/mol und 499 g/mol ist, |
| 1 bis 15 Gew.-Teile | dreifunktionelles Isocyanatgruppen aufweisendes Präpolymer, d. h. drei Isocyanatgruppen pro Molekül aufweisendes Präpolymer, das das Umsetzungsprodukt von (a) Triisocyanaten und Diolen ist |
einsetzt.

14. Verfahren nach Anspruch 1, **dadurch gekennzeichnet, dass** das thermoplastische Polyurethan eine Shore-A Härte zwischen 55 und 85 aufweist.

15. Verfahren nach Anspruch 1 zur Herstellung von vernetztem Polyurethan mit einer Shore A-Härte zwischen 60 und 80.

16. Verfahren nach Anspruch 1, **dadurch gekennzeichnet, dass** man das thermoplastische Polyurethan mit den Isocyanatgruppen aufweisenden Verbindungen mittels Spritzguß verarbeitet.

17. Verfahren nach Anspruch 16, **dadurch gekennzeichnet, dass** man im Mehrkompontenspritzguß das thermoplastische Polyurethan mit den Isocyanatgruppen aufweisenden Verbindungen an einen Kunststoff anspritzt.

18. Verfahren nach Anspruch1. **dadurch gekennzeichnet, dass** es sich bei dem Kunststoff, an den das thermoplastische Polyurethan in Mischung mit den Isocyanatgruppen aufweisenden Verbindungen angespritzt wird, um Polyamid handelt.

19. Verfahren nach Anspruch 18, **dadurch gekennzeichnet, dass** das Polyamid glasfaserverstärkt ist.

20. Polyisocyanat-Polyadditionsprodukte erhältlich durch ein Verfahren gemäß einem der Ansprüche 1 bis 19.

21. Vernetztes Polyurethan mit einer Shore-A Härte zwischen 60 und 80 erhältlich durch ein Verfahren gemäß einem der Ansprüche 1 bis 19.

## Claims

1. A process for reacting thermoplastic polyurethanes with compounds having isocyanate groups, wherein
- the reaction is carried out in the presence of a prepolymer which is the reaction product of (a) isocyanates with (b) compounds which are reactive toward isocyanates and have a molecular weight in the range from 500 g/mol to 10 000 g/mol, preferably from 2000 g/mol to 8000 g/mol,
- and the prepolymer has a glass transition temperature Tg measured by means of DSC in accordance with DIN EN ISO 11357-1 below -35°C
- where the thermoplastic polyurethane is reacted with a mixture of compounds having isocyanate groups, and this mixture has an isocyanate functionality in the range from 2.1 to 3,
and the thermoplastic polyurethane is pelletized and the solid pelletized thermoplastic polyurethane is introduced together with the liquid or viscous compounds having isocyanate groups by means of a feeding aid into an extruder or an injection moulding apparatus.

2. The process according to claim 1, wherein the prepolymer has hydroxyl groups.

3. The process according to claim 1, wherein the prepolymer has isocyanate groups.

4. The process according to claim 3, wherein the prepolymer has an NCO content of from 1.5 to 6%.

5. The process according to claim 1, wherein the prepolymer is based on polyester diols as compounds which are reactive toward isocyanates and have a molecular weight in the range from 500 to 8000 g/mol.

6. The process according to claim 5, wherein the polyester diol is based on branched diols.

7. The process according to claim 6, wherein the polyester diol is based on 3-methyl-1,5-pentanediol.

8. The process according to claim 5, wherein the polyester diol is based on at least two different diols.

9. The process according to claim 5, wherein polyester diols based on different diols are used.

10. The process according to claim 5, wherein the polyester diol is based on adipic acid.

11. The process according to claim 1, wherein the mixture has an NCO content in the range from 4 to 17%.

12. The process according to claim 1, wherein the prepolymer bonds covalently to the TPU as a result of the reaction with the TPU.

13. The process according to claim 1, wherein
| | |
|---|---|
| from 5 to 20 parts by weight | of prepolymer having isocyanate groups and a glass transition temperature Tg measured by means of DSC in accordance with |
| | DIN EN ISO 11357-1 below -35°C which is the reaction product of (a) isocyanates and (b) compounds which are reactive toward isocyanates and have a molecular weight in the range from 500 g/mol to 8000 g/mol, |
| from 1 to 10 parts by weight | of prepolymer having isocyanate groups which is the reaction product of (a) diisocyanates and (c) diols having a molecular weight in the range from 62 g/mol to 499 g/mol, |
| from 1 to 15 parts by weight | of trifunctional prepolymer having isocyanate groups, i.e. prepolymer having three isocyanate groups per molecule, which is the reaction product of (a) triisocyanates and diols, |
are used per 100 parts by weight of thermoplastic polyurethane.

14. The process according to claim 1, wherein the thermoplastic polyurethane has a Shore A hardness in the range from 55 to 85.

15. The process according to claim 1 for producing crosslinked polyurethane having a Shore A hardness in the range from 60 to 80.

16. The process according to claim 1, wherein the thermoplastic polyurethane is processed with the compounds having isocyanate groups by means of injection moulding.

17. The process according to claim 16, wherein, in multicomponent injection moulding, the thermoplastic polyurethane together with the compounds having isocyanate groups is injected onto a plastic.

18. The process according to claim 1, wherein the plastic onto which the thermoplastic polyurethane in admixture with the compounds having isocyanate groups is injected is polyamide.

19. The process according to claim 18, wherein the polyamide is reinforced with glass fibres.

20. A polyisocyanate polyaddition product which can be obtained by a process according to any of claims 1 to 19.

21. A crosslinked polyurethane which has a Shore A hardness in the range from 60 to 80 and can be obtained by a

## Revendications

1. Procédé pour la transformation de polyuréthanes thermoplastiques avec des composés présentant des groupes isocyanate, **caractérisé en ce que**
- on réalise la transformation en présence d'un prépolymère, qui représente le produit de transformation de (a) des isocyanates avec (b) des composés réactifs par rapport aux isocyanates présentant un poids moléculaire entre 500 g/mole et 10 000 g/mole, de préférence entre 2000 g/mole et 8000 g/mole,
- et le prépolymère présentant une température de transition vitreuse T_{g}, mesurée par DSC selon la norme DIN EN ISO 11357-1, inférieure à -35°C,
- le polyuréthane thermoplastique étant transformé avec un mélange de composés présentant des groupes isocyanate et ce mélange présentant une fonctionnalité isocyanate entre 2,1 et 3,
- et le polyuréthane thermoplastique étant granulé et le polyuréthane thermoplastique granulé solide étant introduit via un dispositif auxiliaire d'entrée avec les composés présentant des groupes isocyanate liquides ou visqueux dans une extrudeuse ou un appareil de moulage par injection.

2. Procédé selon la revendication 1, **caractérisé en ce que** le prépolymère présente des groupes hydroxyle.

3. Procédé selon la revendication 1, **caractérisé en ce que** le prépolymère présente des groupes isocyanate.

4. Procédé selon la revendication 3, **caractérisé en ce que** le prépolymère présente une teneur en NCO entre 1,5 et 6%.

5. Procédé selon la revendication 1, **caractérisé en ce que** le prépolymère est à base de polyesterdiols comme composés réactifs par rapport aux isocyanates, présentant un poids moléculaire entre 500 et 8000 g/mole.

6. Procédé selon la revendication 5, **caractérisé en ce que** le polyesterdiol est à base de diols à chaîne ramifiée.

7. Procédé selon la revendication 6, **caractérisé en ce que** le polyesterdiol est à base de 3-méthylpentane-1,5-diol.

8. Procédé selon la revendication 5, **caractérisé en ce que** le polyesterdiol est à base d'au moins deux diols différents.

9. Procédé selon la revendication 5, **caractérisé en ce qu'**on utilise des polyesterdiols qui sont à base de diols différents.

10. Procédé selon la revendication 5, **caractérisé en ce que** le polyesterdiol est à base d'acide adipique.

11. Procédé selon la revendication 1, **caractérisé en ce que** le mélange présente une teneur en NCO entre 4 et 17%.

12. Procédé selon la revendication 1, **caractérisé en ce que** le prépolymère se lie par covalence au TPU par la transformation avec le TPU.

13. Procédé selon la revendication 1, **caractérisé en ce qu'**on utilise, par 100 parties en poids de polyuréthane thermoplastique
| | |
|---|---|
| 5 à 20 | parties en poids de prépolymère présentant des groupes isocyanate, présentant une température de transition vitreuse T_{g}, mesurée par DSC selon la norme DIN EN ISO 11357-1, inférieure à -35°C, qui est le produit de transformation de (a) des isocyanates et de (b) des composés réactifs par rapport aux isocyanates présentant un poids moléculaire entre 500 g/mole et 8000 g/mole, |
| 1 à 10 | parties en poids de prépolymère présentant des groupes isocyanate, qui est le produit de transformation de (a) des diisocyanates et de (c) des diols présentant un poids moléculaire entre 62 g/mole et 499 g/mole, |
| 1 à 15 | parties en poids de prépolymère trifonctionnel présentant des groupes isocyanate, c'est-à-dire un prépolymère présentant trois groupes isocyanate par molécule, qui est le produit de transformation de (a) des triisocyanates et de diols. |

14. Procédé selon la revendication 1, **caractérisé en ce que** le polyuréthane thermoplastique présente une dureté Shore-A entre 55 et 85.

15. Procédé selon la revendication 1 pour la préparation de polyuréthane réticulé présentant une dureté Shore-A entre 60 et 80.

16. Procédé selon la revendication 1, **caractérisé en ce qu'**on transforme le polyuréthane thermoplastique avec des composés présentant des groupes isocyanate par moulage par injection.

17. Procédé selon la revendication 16, **caractérisé en ce qu'**on moule par injection, dans un moulage par injection de plusieurs composants, le polyuréthane thermoplastique avec les composés présentant des groupes isocyanate, sur un matériau synthétique.

18. Procédé selon la revendication 1, **caractérisé en ce qu'**il s'agit, pour le matériau synthétique sur lequel le polyuréthane thermoplastique en mélange avec les composés présentant les groupes isocyanate est moulé par injection, de polyamide.

19. Procédé selon la revendication 18, **caractérisé en ce que** le polyamide est renforcé par des fibres de verre.

20. Produits de polyaddition de polyisocyanate, pouvant être obtenus par un procédé selon l'une quelconque des revendications 1 à 19.

21. Polyuréthane réticulé présentant une dureté Shore A entre 60 et 80, pouvant être obtenu par un procédé selon l'une quelconque des revendications 1 à 19.
